# EUROPEAN PATENT APPLICATION

(11) **EP 2 299 652 A1**
(43) Date of publication of application: **23.03.2011**
(21) Application number: 09305878.2
(22) Date of filing: 21.09.2009
(51) Int. Cl.: H04L 29/06, H04L 9/32

(54) **Device and method for generating confirmations of data transfers between communication equipments, by data comparison**

(71) Applicant: Thomson Licensing, 92100 Boulogne-Billancourt (FR)
(72) Inventor: Picconi, FABIO, 92648, Boulogne cedex (FR); Varvello, MATTEO, 92648, Boulogne cedex (FR); Diot, CHRISTOPHE, 92648, Boulogne cedex (FR)
(74) Representative: Berthier, Karine

(57) **Abstract**

A method is intended for generating confirmations of data transfers between communication equipments (CE1-CE2) connected to a communication network (CN). This method consists, when an application running in a first communication equipment (CE1) wants to transfer data packets to at least one second communication equipment (CE2), i) in transmitting a request, comprising communication identifiers of the first (CE1) and second (CE2) communication equipments and requesting a data transfer control, to first (GW1) and second (GW2) auxiliary communication equipments acting as interfaces between the communication network (CN) and the first (CE1) and second (CE2) communication equipments, respectively, and ii) in storing auxiliary data representative of these data packets transferred through the first (GW1) and second (GW2) auxiliary communication equipments, these stored auxiliary data constituting proofs of transmission of the data packets by the first communication equipment (CE1) and of reception of at least some of these data packets by the second communication equipment (CE2).

## Description

### Technical field

The present invention relates to the transfer of data between communication equipments connected to at least one communication network, and more precisely to securing of data transfers.

One means here by "data" any type of digital information that can be transmitted through a communication network of the wired or wireless type, possibly in a peer-to-peer (or P2P) mode. So it can be a service message or a content, such as a video, a file of information data, a television program, a radio program or a software update, for instance.

### Background of the invention

As it is known by the man skilled in the art, numerous communication equipments comprise applications which need to transfer (or exchange) data in a secured manner. But securing applications (possibly Internet ones) is a challenging task. In centralized server-based applications, such as web applications, security is mainly achieved by protecting the server from external attacks. However, an increasing number of applications rely on programs that run on home communication equipments, such as computers (or PCs) or laptops, and perform critical tasks on them. Security is harder to achieve with these communication equipments as the application software runs on an insecure environment (for instance a PC may be under full control of its user). So, users sometimes install modified applications, which deviate from a standard protocol, to obtain a personal benefit (for instance free-riding).

While an insecure execution environment makes deviant behavior impossible to prevent, the security of many applications can be enhanced by providing accountability. One means here by "accountability" the fact that some user actions are securely recorded, so that these users cannot deny having performed these actions. In the context of an Internet application, accountability can be provided by non-repudiation services. It is recalled that the ISO/IEC 13888-1 rule differentiates between non-repudiation of transport (or NRT) and non-repudiation of receipt (or NRR) which both prove that a content has been received by a recipient. The difference lies in that NRT proofs are generated by a Delivery Agent, while NRR proofs are generated by the recipient. A non repudiation service collects irrefutable evidence regarding data transfers (or exchanges) between communication equipments, which can be later used to resolve disputes regarding these data, and whether they have been effectively sent and received by the corresponding parties.

In practical scenarios, non-repudiation services require the presence of a trusted third party (or TTP), which collects the necessary evidence and ensures fairness, as described in the document of S. Kremer et al., "An intensive survey of fair non-repudiation protocols", in Computer Communications, 25(17):1606-1621, November 2002. A TTP typically consists of one or more computers which must be highly available and whose software runs in a secure environment (such as servers or tamper-proof devices). Non-repudiation services further requires a certificate authority (or CA), which verifies user identities and assigns private keys. These TTP and CA generate a substantial financial cost which must be sustained by the system. As a result, non-repudiation services are typically limited to critical applications, such as electronic payment or other forms of highly secured transactions.

A typical example of an application relying on non-repudiation is the certified delivery, which provides the sender with an irrefutable proof that a given digital content (such as a file) has been effectively delivered to a recipient. Certified delivery relies on a trusted third party, which is called the delivery agent (or sometimes the witness), interacts with the recipient and provides non-repudiation of transport (or NRT), and so generates data transfer confirmations (or proofs). But, when the recipient refuses to issue a signed receipt to the sender (after having received a content) he can later claim that this content has never been delivered.

### Summary of the invention

So the object of this invention is to improve the situation.

For this purpose, the invention provides a method, intended for generating confirmations of data transfers between communication equipments connected to at least one communication network, and comprising the steps, when an application running in a first communication equipment wants to transfer data packets to at least one second communication equipment, of:
i) transmitting a request, comprising communication identifiers of these first and second communication equipments and requesting a data transfer control, to first and second auxiliary communication equipments acting as interfaces between the communication network and the first and second communication equipments, respectively, and
ii) storing auxiliary data representative of the data packets transferred through the first and second auxiliary communication equipments, these stored auxiliary data constituting proofs of transmission of the data packets by the first communication equipment and of reception of at least some of these data packets by the second communication equipment.

The method according to the invention may include additional characteristics considered separately or combined, and notably:
- in step ii) one may apply a same chosen cryptographic function to a chosen part of each transferred data packet in order to produce corresponding first auxiliary data, and then one may store these produced first auxiliary data in correspondence with headers of corresponding transferred data packets which form corresponding second auxiliary data;
   ➢ in step ii) one may apply the chosen cryptographic function to each payload which is contained into each transferred data packet in order to produce corresponding first auxiliary data;
   ➢ in step ii) one may apply a same chosen cryptographic function of a hash type;
- in a variant of step ii) one may produce and store a copy of each transferred data packet, each produced copy forming auxiliary data;
- it may comprise a step iii) consisting in producing a data transfer confirmation message when all the stored auxiliary data, originating from the first and second auxiliary communication equipments, are identical (except for possible retransmissions of packets) therebetween and effectively representative of corresponding transferred data packets;
   ➢ in step iii) one may transmit the stored auxiliary data to the first communication equipment, with an identifier associated to the first or second auxiliary communication equipment, and possibly with timestamps representative of the instants at which the corresponding transferred data packets have been received;
   ➢ in step iii) one may produce first auxiliary data by applying the chosen cryptographic function to the chosen part of copies of the data packets that have been transferred from the first communication equipment, then one may compare these produced first auxiliary data to the corresponding first auxiliary data received from the first and second auxiliary communication equipments, and one may produce a data transfer confirmation message when all the auxiliary data are identical (except for possible retransmissions of packets) therebetween;
   ➢ in step iii) one may compare copies of the transferred data packets with the received auxiliary data, and one may produce a data transfer confirmation message when all these received auxiliary data are identical (except for possible retransmissions of packets) to the corresponding data packet copies;
- in step i) the request to be transmitted may comprise communication addresses and port numbers of the first and second communication equipments;
- in step ii) one may store auxiliary data after having received an authorization from the second communication equipment.

The invention also provides a system, intended for generating confirmations of data transfers between communication equipments connected to at least one communication network, and comprising:
- first processing means arranged, when an application running in a first communication equipment to which it is associated wants to transfer data packets to at least one second communication equipment, for generating a request, comprising communication identifiers of these first and second communication equipments and requesting a data transfer control, for first and second auxiliary communication equipments acting as interfaces between the communication network and the first and second communication equipments, respectively, and
- second processing means associated to the first and second auxiliary communication equipments and arranged for storing auxiliary data representative of the data packets transferred through the first and second auxiliary communication equipments, these stored auxiliary data constituting proofs of transmission of the data packets by the first communication equipment and of reception of at least some of the data packets by the second communication equipment.

The second processing means associated to the first and second auxiliary communication equipments are arranged for applying a same chosen cryptographic function to a chosen part of each transferred data packet in order to produce corresponding first auxiliary data, and then for storing these produced first auxiliary data in correspondence with headers of corresponding transferred data packets which form corresponding second auxiliary data.

In a variant the second processing means associated to the first and second auxiliary communication equipments may be arranged for producing and storing a copy of each transferred data packet, each produced copy forming auxiliary data.

Moreover the first processing means may be further arranged, when a data packet transfer is finished, for producing a data transfer confirmation message when all the stored auxiliary data, originating from the first and second auxiliary communication equipments, are identical (except for possible retransmissions of packets) therebetween and effectively representative of corresponding transferred data packets.

### Brief description of the figure

Other features and advantages of the invention will become apparent on examining the detailed specifications hereafter and the appended drawings, wherein:
- figure 1 schematically and functionally illustrates a communication network to which are connected three communication equipments, comprising a first part of a system according to the invention, through three home gateways comprising a second part of this system according to the invention, and
- figure 2 is a temporal diagram illustrating successive phases of an example of embodiment of a process according to the invention.

### Detailed description of the preferred embodiment

The appended drawings may serve not only to complete the invention, but also to contribute to its definition, if need be.

The invention aims at offering a method, and an associated system (S), intended for allowing generation of confirmations of data transfers between communication equipments (CEi) that are connected to at least one communication network (CN).

In the following description it will be considered that the communication network(s) (CN) is (are) wired (or fixed) network(s), such as DSL network(s) or optical fiber network(s) or else cable network(s), which is (are) preferably connected to the Internet. But the invention is not limited to this type of communication network. Indeed, a communication network may be also a wireless communication network, such as a mobile or cellular or else radio communication network.

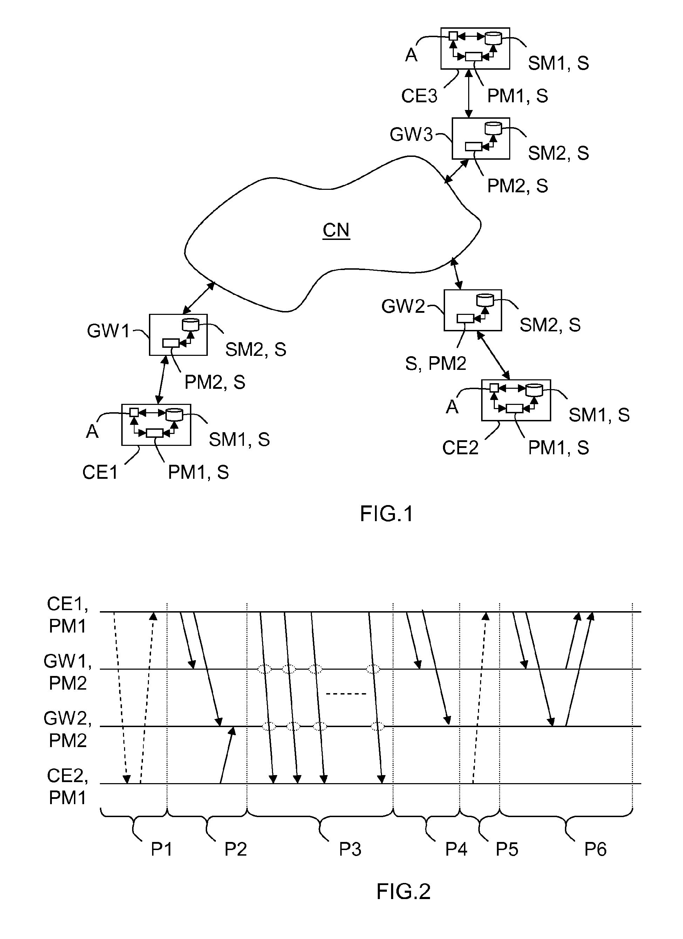

As it is schematically illustrated in figure 1, the invention concerns data transfers between at least two communication equipments CEi that are each connected to a communication network CN through an auxiliary communication equipment GWi. In this non limiting example three (communication) equipments CEi (i = 1 to 3) are connected to a single communication network CN. But the number of communication equipments CEi may be smaller than three (i.e. equal to two) or greater than three. Moreover, these communication equipments CEi could be connected to different communication networks.

In the following description it will be considered that the (communication) equipments CEi are computers or laptops. But the invention is not limited to this type of communication equipment. Indeed, a communication equipment may be also a content receiver (for instance a home gateway or a set-top box (STB) located in the user's home premise), a mobile or cellular telephone, a fixed telephone, or a personal digital assistant (PDA), provided that it comprises a communication modem (or any equivalent communication means).

Moreover, in the following description it will be considered that the auxiliary communication equipments GWi are home gateways. Home gateways are interesting communication equipments offering two characteristics which can be advantageously exploited by the invention: 1) they can act as a trusted third party because their firmware and execution environment are generally controlled by an Internet service provider (or ISP), and 2) they are located at the user's access link and therefore can detect any traffic sent or received by applications accessing the Internet through them (so if they are instructed to detect a traffic, they can act as trusted witnesses of the fact that data have been sent by a first communication equipment (submission event), and that these data have been delivered to a second communication equipment CE2 (delivery event)).

The invention is not limited to the above mentioned type of auxiliary communication equipment. Indeed, the invention concerns any type of auxiliary communication equipment acting as an interface between a communication network CN and at least one communication equipment CEi.

It is important to note that the transfers (or exchanges) of data may be of the peer-to-peer (or P2P) type. In this case, the communication equipments CEi constitute peers that are connected therebetween through communication network(s).

More, in the following description it will be considered that the data to be transferred constitute videos. But the invention is not limited to this type of data. Indeed, the invention concerns any type of data and notably data belonging to a service message or a content, such as a file of information data, a television program, a radio program or a software update, for instance.

The invention proposes a method intended for generating confirmations of data transfers between communication equipments CEi. This method comprises at least two main steps and can be implemented by a distributed system S according to the invention. Such a system S comprises at least first processing modules (or means) PM1 that are associated respectively to the communication equipments CEi, and second processing modules (or means) PM2 that are associated respectively to the auxiliary communication equipments (here home gateways) GWi, which are themselves associated respectively to the communication equipments CEi.

One means here by "associated" the fact that a first PM1 or second PM2 processing module equips a communication equipment CEi or an auxiliary communication equipment GWi (as illustrated in figure 1). But in a variant it could also mean coupled (for instance connected) to a communication equipment CEi or an auxiliary communication equipment GWi.

A first main step (i) of the method according to the invention is implemented each time an application A, which is running in a first communication equipment (for instance CE1), wants to transfer data packets to at least one second communication equipment (for instance CE2).

For instance, when the data constitute videos the application A can be a video streaming application or a video on demand (VoD) application. But the invention is not limited to this type of application. Indeed it concerns any application, possibly of the Internet type, needing to transfer (or exchange) data in a secured manner.

The first main step (i) consists of transmitting a request, which comprises communication identifiers of the first CE1 and second CE2 communication equipments and which requests a data transfer control, to the first GW1 and second GW2 auxiliary communication equipments which act as interfaces between the communication network CN and the first CE1 and second CE2 communication equipments, respectively.

The first main step (i) may be implemented by a first processing module PM1 of the system S, which is associated to the first communication equipment CE1 whose application A wants to transfer data. So, when the application A wants to transfer data it informs the associated first processing module PM1 in order it initiates a confirmation (or non-repudiation) service.

As illustrated in the diagram of figure 2, this information of the associated first processing module PM1 may be preceded by a preliminary handshake phase P1 during which the applications A, running into the first CE1 and second CE2 communication equipments, agree on a video transfer.

Once this possible preliminary handshake phase P1 has been performed and once the first processing module PM1 has been informed by the application A, it generates immediately a data transfer control request intended to be transmitted by its associated first communication equipment CE1 to the first GW1 and second GW2 home gateways. These requests are intended for requesting the first GW1 and second GW2 home gateways to control or log every data packet originating from the first CE1 or second CE2 communication equipment.

These request transmissions occur during phase P2 of the diagram of figure 2. As illustrated in figure 2, during phase P2 the second communication equipment CE2 may also transmit a message (or request) to its associated second home gateway GW2 in order to authorize it to proceed to the data packet control (or log).

For instance, the communication identifiers that are contained into a data transfer control request comprise the communication addresses and port numbers of the first CE1 and second CE2 communication equipments. The communication addresses may be IP addresses, for instance. These communication identifiers are intended to allow the first GW1 and second GW2 home gateways to identify the data packets they are supposed to control during the next transfer phase P3 and which will originate from the first communication equipment CE1.

A second main step (ii) of the method according to the invention occurs when phase P2 is finished and when begins the transfer of data packets between the first CE1 and second CE2 communication equipments through the first GW1 and second GW2 home gateways and through the communication network CN. This data packet transfer occurs during phase P3 of the diagram of figure 2.

Preferably, one stores a copy of each data packet that is transferred from the first communication equipment CE1 to the second communication equipment CE2. These storing operations may be managed by the first processing means PM1. The data packet copies are stored into first storing means SM1, which are located into the concerned (first) communication equipment CEi and which may be part of the system S (or of the communication equipment CEi). The first storing means SM1 may be of any type known by the man skilled in the art. So, it may be a memory or a database.

The second main step (ii) consists in storing auxiliary data representative of the data packets that are transferred through the first GW1 and second GW2 auxiliary communication equipments. In other words one stores auxiliary data representative of the data packets that are received and transferred through the first auxiliary communication equipment GW1 and one stores auxiliary data representative of the same data packets that are received and transferred through the second auxiliary communication equipment GW2. These storing operations are materialized by ovals in dotted line in phase P3 of figure 2.

These stored auxiliary data constitute a proof of transmission of the transferred data packets by the first communication equipment CE1 and a proof of reception of at least some of these transferred data packets by the second communication equipment CE1.

The second main step (ii) may be implemented by the second processing modules PM2 of the system S, which are associated respectively to the first GW1 and second GW2 auxiliary communication equipments which are the addressees of the data transfer control requests generated by the first processing module PM1 of the first communication equipment CE1 during phase P2.

The auxiliary data may be stored into second storing means SM2, which are located into the concerned home gateways GWi and which may be part of the system S (or of the home gateways GWi). The second storing means SM2 may be of any type known by the man skilled in the art. So, it may be a memory or a database.

The auxiliary data may be of at least two different types.

For instance, auxiliary data may be produced by the second processing modules PM2 by means of a same chosen cryptographic function H applied to a chosen part pⱼ of each transferred data packet Pⱼ. For instance, this chosen cryptographic function H may be of a hash type. But any other cryptographic function, known from the man skilled in the art, may be used. In the following description, the auxiliary data produced by means of the cryptographic function are called first auxiliary data.

For instance the cryptographic function H is applied to the payload pⱼ which is contained into each transferred data packet Pⱼ.

The produced first auxiliary data H(pⱼ) are then stored in the second storing means SM2 in correspondence with the headers hⱼ of the corresponding transferred data packets Pⱼ. In the following description, the headers hⱼ are called second auxiliary data. The first H(pⱼ) and second hⱼ auxiliary data constitutes the auxiliary data that are representative of the transferred data packets Pj received by a home gateway GWi.

This solution can be used when the home gateways GWi possess enough computing power to apply a cryptographic function in real-time on every packet being logged or when the associated second storing means SM2 possess a small storage capacity. When the home gateways GWi possess a reduced computing power, or when their associated second storing means SM2 possess a big storage capacity, or else when the quantity of data packets to be transferred is small, a variant can be used.

In this variant, auxiliary data may be produced by the second processing modules PM2 by copying the transferred data packet Pⱼ received by a home gateway GWi. These produced data packets copies (or auxiliary data) are then stored by the second processing modules PM2 into the second storing means SM2 associated to its home gateway GWi.

The method according to the invention may further comprise a third main step (iii) which occurs when phase P3 (and therefore the data packet transfer) is finished (or complete).

Preferably and as illustrated in figure 2, when the data packet transfer is finished the application A running into the first communication equipment CE1 informs the first processing means PM1 of this first communication equipment CE1. Then the first processing means PM1 generates a message (or request) to inform the first GW1 and second GW2 home gateways of the end of the transfer and therefore to request to stop controlling (or logging) the data packets originating from the first communication equipment CE1. This message generation and the message transmissions occur during phase P4.

When phase P4 is finished, the application A of the second communication equipment CE2 may transmit a message comprising a receipt (indicating that it has received transferred data packets Pⱼ) to the first communication equipment CE1. This message transmission occurs during phase P5. But, if this application A is a modified application it may decide to not generate such a receipt message. So, the third main step (iii) is notably intended for ensuring the first communication equipment CE1 that the second communication equipment CE2 has effectively received at least some of the transferred data packets Pⱼ without any doubt.

It is important to note that phases P1 and P5 of figure 2 are not parts of the method according to the invention. They are specific to the particular example described. Other applications may use the non-repudiation service offered by the invention in a way which is slightly different from the one illustrated as example in figure 2.

The third main step (iii) occurs during phase P6. It consists in producing a data transfer confirmation message (or irrefutable evidence) when all the auxiliary data, stored into the second storing means S2 associated to the first GW1 and second GW2 home gateways, are identical therebetween and effectively representative of corresponding transferred data packets Pⱼ that have been transferred from the first communication equipment CE1.

The third main step (iii) may be implemented both by the first processing module PM1 (associated to the first communication equipment CE1) and the second processing modules PM2 associated respectively to the first GW1 and second GW2 home gateways.

For instance and as illustrated in figure 2, the first processing module PM1 generates a message to request from the first GW1 and second GW2 home gateways the auxiliary data they have stored into their respective second storing means SM2 and which constitute delivery proofs for the considered transferred data packets.

This message is processed by the second processing modules PM2 associated to the first GW1 and second GW2 home gateways. In response to this message each concerned second processing module PM2 generates a response message comprising at least the auxiliary data, stored into the associated second storing means SM2, with an identifier which is associated to its first GW1 or second GW2 home gateway. Each home gateway identifier may be a private key which is used by the associated second processing module PM2 to digitally sign the response message. The home gateway identifiers may be attributed by an Internet service provider (or ISP) to the first GW1 and second GW2 home gateways.

Then the response messages are transmitted by the first GW1 and second GW2 home gateways to the first communication equipment CE1.

It is important to note that each response message may possibly further comprise timestamps representative of the instants at which the transferred data packets have been received by the first GW1 or second GW2 home gateway. These timestamps are only additional information intended to offer additional proof of delivery. But they are not used by the method itself.

The response message, generated by the second processing module PM2 associated to the first home gateway GW1, can be seen as a non-repudiation of submission token (or NRST), and therefore a proof of data transmission, and the response message generated by the second processing module PM2 associated to the second home gateway GW2 can be seen as a non-repudiation of transport token (or NRTT), and therefore a proof of data reception.

Once the first GW1 and second GW2 home gateways have transmitted their respective response messages, their associated second processing modules PM2 may order (or they may proceed themselves to) deletion (or discarding) of the corresponding auxiliary data into the associated second storing means SM2.

When the first processing module PM1 of the first communication equipment CE1 has received the response messages (or tokens) from the first GW1 and second GW2 home gateways, it processes them depending on the type of the auxiliary data they contain, after having check the private identifiers they respectively "contain".

If the response messages (or tokens) contained first H(pⱼ)(i) and second hⱼ(i) auxiliary data, the first processing module PM1 produces also first auxiliary data H(pⱼ)' from the local copies of the data packets Pⱼ that have been transferred from its first communication equipment CE1 and which are stored into its associated first storing means SM1. For this purpose it applies the same chosen cryptographic function H to the same chosen part pⱼ of each data packet copy Pⱼ.

Then the first processing module PM1 compares these produced first auxiliary data H(pⱼ)' to the corresponding first auxiliary data H(pⱼ)(1) and H(pⱼ)(2) it has received from the first GW1 and second GW2 auxiliary communication equipments. In case where all the first auxiliary data H(pⱼ)', H(pⱼ)(1) and H(pⱼ)(2) are identical therebetween, the first processing module PM1 produces a data transfer confirmation message which constitutes an irrefutable proof of data delivery. If a packet Pⱼ has been retransmitted one or more times, for instance due to packet losses in the network, the first processing module PM1 produces a data transfer confirmation message if the received auxiliary data shows that at least one copy of each retransmitted packet has been received by the remote second auxiliary communication equipment GW2.

It is important to note that the values of H(pⱼ)(i) uniquely identify the data content that has been transferred (due to the properties of the cryptographic function). So, the portion of the original content that H(pᵢ)(i) corresponds to can be obtained using the sequence number and length fields that are contained in the associated header hⱼ(i).

If the response messages (or tokens) contained auxiliary data that are copies of the received transferred data packets Pⱼ, the first processing module PM1 compares local copies of the data packets Pⱼ, that have been transferred from its first communication equipment CE1 and which are stored into its associated first storing means SM1, with the received auxiliary data.

In case where all the local copies of the data packets Pⱼ are identical to the corresponding received auxiliary data, the first processing module PM1 produces a data transfer confirmation message which constitutes an irrefutable proof of data delivery. If a packet Pⱼ has been retransmitted one or more times, for instance due to packet losses in the network, the first processing module PM1 produces a data transfer confirmation message if the received auxiliary data shows that at least one copy of each retransmitted packet has been received by the remote second auxiliary communication equipment GW2.

The first PM1 and second PM2 processing modules are preferably made of software modules, at least partly. But they could be also made of electronic circuit(s) or hardware modules, or a combination of hardware and software modules (in this case the control device D comprises also a software interface allowing interworking between the hardware and software modules). In case where they are exclusively made of software modules they can be stored in a memory of a communication equipment CEi or of an auxiliary communication equipment GWi or in any computer software product.

The invention offers several advantages, and notably:
- it is application-independent. Indeed, non-repudiable evidence regarding data submission and delivery is collected at the packet-level, and without inspection of the packet payload (i.e., the auxiliary communication equipment is not aware of any application-layer details),
- it can support legacy applications. Indeed, given that it works at the packet-level, legacy applications may be supported by augmenting the application with a new module (PM1) which is aware of the non-repudiation service. The role of such module (PM1) is to request the auxiliary communication equipment to start logging data traffic before the legacy application data transfer begins, and to collect and process non-repudiation tokens once this legacy application data transfer is complete,
- it does not require the deployment of additional hardware, such as secure gateway devices or trusted servers. Indeed, the invention may use existing auxiliary communication equipments, such as home gateways, which are already deployed at the customer premises,
- it may simplify private key distribution. Indeed, if an ISP owns and controls the auxiliary communication equipments, it can act as a certificate authority and therefore can easily and securely assign a private key to each auxiliary communication equipment.

The invention is not limited to the embodiments of method and system described above, only as examples, but it encompasses all alternative embodiments which may be considered by one skilled in the art within the scope of the claims hereafter.

## Claims

1. Method for generating confirmations of data transfers between communication equipments (CEi) connected to at least one communication network (CN), **characterized in that**, when an application running in a first communication equipment (CE1) wants to transfer data packets to at least one second communication equipment (CE2), it comprises the steps of: i) transmitting a request, comprising communication identifiers of said first (CE1) and second (CE2) communication equipments and requesting a data transfer control, to first (GW1) and second (GW2) auxiliary communication equipments acting as interfaces between said communication network (CN) and said first (CE1) and second (CE2) communication equipments, respectively, and ii) storing auxiliary data representative of said data packets transferred through said first (GW1) and second (GW2) auxiliary communication equipments, these stored auxiliary data constituting proofs of transmission of said data packets by said first communication equipment (CE1) and of reception of at least some of said data packets by said second communication equipment (CE2).

2. Method according to claim 1, **characterized in that** in step ii) one applies a same chosen cryptographic function to a chosen part of each transferred data packet to produce corresponding first auxiliary data, and then one stores said produced first auxiliary data in correspondence with headers of corresponding transferred data packets which form corresponding second auxiliary data.

3. Method according to claim 2, **characterized in that** in step ii) one applies said chosen cryptographic function to each payload contained into each transferred data packet to produce corresponding first auxiliary data.

4. Method according to one of claims 2 and 3, **characterized in that** in step ii) one applies a same chosen cryptographic function of a hash type.

5. Method according to claim 1, **characterized in that** in step ii) one produces and stores a copy of each transferred data packet, each produced copy forming auxiliary data.

6. Method according to one of claims 1 to 5, **characterized in that** it comprises a step iii) consisting in producing a data transfer confirmation message when all said stored auxiliary data, originating from said first (GW1) and second (GW2) auxiliary communication equipments, are identical, except for possible retransmissions of packets, therebetween and effectively representative of corresponding transferred data packets.

7. Method according to claim 6, **characterized in that** in step iii) one transmits said stored auxiliary data to said first communication equipment (CE1), with an identifier associated to the first (GW1) or second (GW2) auxiliary communication equipment.

8. Method according to claim 7, **characterized in that** in step iii) one transmits said stored auxiliary data to said first communication equipment (CE1), with an identifier associated to the first (GW1) or second (GW2) auxiliary communication equipment and with timestamps representative of the instants at which the corresponding transferred data packets have been received by said first (GW1) or second (GW2) auxiliary communication equipment.

9. Method according to one of claims 7 and 8 combined with one of claims 2 to 4, **characterized in that** in step iii) one produces first auxiliary data by applying said chosen cryptographic function to said chosen part of copies of the data packets that have been transferred from the first communication equipment (CE1), then one compares these produced first auxiliary data to the corresponding first auxiliary data received from the first (GW1) and second (GW2) auxiliary communication equipments, and one produces a data transfer confirmation message when all said first auxiliary data are identical, except for possible retransmissions of packets, therebetween.

10. Method according to one of claims 7 and 8 combined with claim 5, **characterized in that** in step iii) one compares copies of the transferred data packets with the received auxiliary data, and one produces a data transfer confirmation message when all said received auxiliary data are identical, except for possible retransmissions of packets, to the corresponding data packet copies.

11. Method according to one of claims 1 to 10, **characterized in that** in step i) said request to be transmitted comprises communication addresses and port numbers of said first (CE1) and second (CE2) communication equipments.

12. Method according to one of claims 1 to 11, **characterized in that** in step ii) one stores auxiliary data after having received an authorization from said second communication equipment (CE2).

13. System (S) for generating confirmations of data transfers between communication equipments (CEi) connected to at least one communication network (CN), **characterized in that** it comprises i) first processing means (PM1) arranged, when an application running in a first communication equipment (CE1) to which it is associated wants to transfer data packets to at least one second communication equipment (CE2), for generating a request, comprising communication identifiers of said first (CE1) and second (CE2) communication equipments and requesting a data transfer control, for first (GW1) and second (GW2) auxiliary communication equipments acting as interfaces between said communication network (CN) and said first (CE1) and second (CE2) communication equipments, respectively, and ii) second processing means (PM2) associated to said first (GW1) and second (GW2) auxiliary communication equipments and arranged for storing auxiliary data representative of said data packets transferred through said first (GW1) and second (GW2) auxiliary communication equipments, these stored auxiliary data constituting proofs of transmission of said data packets by said first communication equipment (CE1) and of reception of at least some of said data packets by said second communication equipment (CE2).

14. System according to claim 13, **characterized in that** said second processing means (PM2) associated to said first (GW1) and second (GW2) auxiliary communication equipments are arranged for applying a same chosen cryptographic function to a chosen part of each transferred data packet to produce corresponding first auxiliary data, and then for storing said produced first auxiliary data in correspondence with headers of corresponding transferred data packets which form corresponding second auxiliary data.

15. System according to claim 13, **characterized in that** said second processing means (PM2) associated to said first (GW1) and second (GW2) auxiliary communication equipments are arranged for producing and storing a copy of each transferred data packet, each produced copy forming auxiliary data.

16. System according to one of claims 13 to 15, **characterized in that** said first processing means (PM1) are further arranged, when a data packet transfer is finished, for producing a data transfer confirmation message when all said stored auxiliary data, originating from said first (GW1) and second (GW2) auxiliary communication equipments, are identical, except for possible retransmissions of packets, therebetween and effectively representative of corresponding transferred data packets.
